# EUROPEAN PATENT APPLICATION

(11) **EP 4 807 171 A1**
(43) Date of publication of application: **16.09.2026**
(21) Application number: 26164268.0
(22) Date of filing: 12.03.2026
(51) Int. Cl.: F02M 37/00, F02M 37/08, H01M 8/04082, F02B 63/04

(54) **POWER GENERATION SYSTEM**

(30) Priority: 13.03.2025 NL 2039969
(71) Applicant: Bredenoord Holding B.V., 7325 WT Apeldoorn (NL)
(72) Inventor: VAN DE HOEK, Nick, 7325 WT Apeldoorn (NL); KEUKENS, Kasper, 7325 WT Apeldoorn (NL)
(74) Representative: V.O.

(57) **Abstract**

A power generation system (100) with a power generator (110) and a separate external fuel tank (150) are provided. The power generator is arranged to transform fuel to electrical energy. The power generator has an internal tank (122) with a first fuel pump (124) to transport fuel to an energy converter. The separate fuel tank (150) is provided with a second fuel pump (146) to supply fuel to the power generator, either directly to the energy converter or to the internal fuel tank. The second fuel pump is controlled by the power generator and may be operated if there is less than a particular amount of fuel left in the internal tank.

## Description

### TECHNICAL FIELD

The various aspects and examples thereof relate to fuel supply of electricity generators that convert chemical energy into electrical energy.

### BACKGROUND

At places without connection to a central power grid, local generation of electricity may be desired. Such locations may be remote and difficult to reach, for which reason a longer operating time without a need for refuelling is desired.

### SUMMARY

With the advent of new fuels due to rules and regulations imposed by politics and government for environmental reasons, new challenges occur from a safety perspective related to the new fuels. With Diesel as a preferred fuel for a long time, other safety measures were applicable as compared to petrol, methanol, ethanol and similar fuels. Second, flexibility is preferred in supply of fuel to the remote locations and use thereof at remote locations. External tanks may be used, which pose challenges on compatibility, efficiency and safety.

A first aspect provides a power generator arrangement for converting chemical energy provided by a fuel to electrical energy. The power generator arrangement comprises a first fuel tank for holding a first fuel tank for holding a first quantity of fuel, an energy converter arranged to convert the chemical energy to the electrical energy, a first fuel pump for transporting fuel from the first fuel tank to the energy converter, a fuel level sensor arranged to provide a fuel level sensor signal having a value indicative of a level of fuel in the first fuel tank, a fuel inlet for receiving fuel, and a control circuit. The control circuit is arranged to operate the first pump and provide a control signal to a control receiver a fuel supply arrangement external of the power generator arrangement, for operating a second fuel pump comprised by the fuel supply arrangement, for providing fuel from a second fuel tank comprised by the fuel supply arrangement to the fuel inlet, upon determining that the fuel level sensor signal has a value meeting a pre-determined condition.

By providing a generator with a relatively small internal fuel storage and the generator being arranged to be coupled to an external fuel storage with its own pump for actively providing fuel to the generator, the generator can be kept small and simple. As such, it can also be used as location where frequent refuelling is difficult or where refuelling is not required very often, as the energy consumption by any load is not very high.

An implementation further comprises a power outlet for providing power to the second fuel pump for operating the second fuel pump. In this way, no additional power supply may be required for the second fuel pump.

In another implementation, the control circuit comprises a wireless signal transmitter for providing the control signal to the control receiver in a wireless fashion. Power generators may be used in harsh environments, busy workplaces and other situations where there may a risk of damage to cables. By providing wireless control, this risk is reduced or mitigated.

In again another implementation, the fuel inlet is arranged to be connected to the second fuel pump for receiving fuel from the fuel supply arrangement. This allows for efficient refuelling of the first fuel tank, particular if the fuel inlet is arranged to provide fuel received to the first fuel tank.

In yet another implementation, the fuel inlet is arranged to provide fuel received directly the energy converter. This allows fuel in the first fuel tank to be saved as a back up.

In a further implementation, the energy converter comprises a fuel cell. Fuel cells provide for efficient transformation of chemical energy to electrical energy.

In yet a further implementation, the energy converter comprises an internal combustion engine. This allows for robust transformation from chemical energy to electrical energy. Whereas fuel cells may provide higher efficiency, they are delicate and may be more prone to failure. Second, fuel cells are less flexible when it comes to variations in output power when feeding a load with varying power needs.

In again a further implementation, the pre-determined condition is that the signal value indicates that the first quantity of fuel is below a pre-determined amount. This allows for a backup quantity of fuel to be stored in the first fuel tank, which may be used when, for example, supply of fuel from the second fuel tank is not available, for example because the connection is ruptured or the second fuel pump is defective or out of power.

In another implementation, the first fuel tank is provided with a gas outlet provided above a maximum filling level of the first fuel tank, the gas outlet being arranged to be connected to a gas conduit. This allows for keeping vapour pressure in the tank at a safe level.

A second aspect provides a fuel supply arrangement arranged for providing fuel to the power generator arrangement according to the first aspect. The fuel supply arrangement comprises a second fuel tank, a control receiver arranged to receive the control signal, a fuel outlet connected to the second fuel tank for providing fuel from the second fuel tank, a second fuel pump operationally connected to the control receiver and connected to a fuel outlet to provide fuel from the second fuel tank to the fuel inlet of the power generator arrangement via the fuel outlet, upon receiving the control signal. Such arrangement provides an efficient complement to the power generator arrangement according to the first aspect.

An implementation further comprises a power inlet for receiving power from the power generator arrangement and for providing the received power to the second fuel pump for operating the second fuel pump. With this implementation, no separate power generator or separate power supply may be required for powering the second fuel pump.

In another implementation, the control receiver comprises a wireless signal receiver for receiving the control signal from the control circuit in a wireless fashion. Power generators may be used in harsh environments, busy workplaces and other situations where there may a risk of damage to cables. By providing wireless control, this risk is reduced or mitigated.

In a further implementation, the fuel outlet is arranged to be connected to the fuel inlet for providing fuel from the fuel supply arrangement to the inlet of the power generator arrangement. This allows for efficient refuelling of the first fuel tank, particular if the fuel inlet is arranged to provide fuel received to the first fuel tank.

In yet a further implementation, the second fuel tank is provided with a gas inlet, the gas inlet being arranged to be coupled to a gas conduit. This allows to keep the vapour pressure in the second fuel tank at a proper level.

A third aspect provides a system for converting chemical energy provided by a fuel to electrical energy, the system comprising the power generator arrangement according to the first aspect and the fuel supply arrangement according to the second aspect.

In an implementation, the fuel is methanol. Methanol is a fuel that may be produced in a relatively simple way, based on sustainable raw materials.

In another implementation, the first fuel pump has a first maximum power lower than a second maximum power of the second fuel pump. The first fuel pump only has to pump fuel from an internal tank to the power converter, whereas the second fuel pump may have to pump fuel over a larger distance and/or at a higher flow rate. In this implementation, each pump may be dimensioned efficiently for its individual dedicated task.

In yet another implementation, a proximal end of the transportation conduit is connected to the second fuel pump and a distal end of the transportation conduit is connected to the fuel inlet. This allows for a proper connection for transportation of fuel.

A further implementation comprises an electrical power supply line between the power generator arrangement and the fuel supply arrangement for providing electrical power to the second fuel pump. In this way, the second fuel pump may not require a separate power supply.

In again another implementation, the power generator arrangement is provided in a first housing and the fuel supply arrangement is provided in a second housing, the second housing being distinct from the first housing. This allows for flexible deployment of the system, for example by replacing the fuel supply arrangement when the second fuel tank is empty. In the same way, if more maximum power is required or in case of failure, only the power generator arrangement may be replaced and the fuel supply arrangement may be left in place. It noted that the system may be provided with more than one fuel supply arrangements each connected to the power generator arrangement as set out above, each in their own individual housing.

### BRIEF DESCRIPTION OF THE DRAWINGS

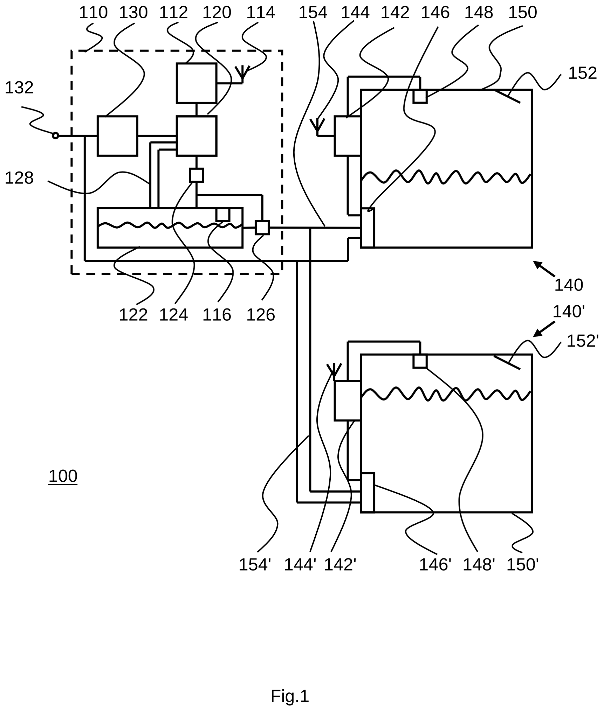

The various aspects and examples thereof will now be elucidated in conjunction with Figure 1, which shows a power system.

### DETAILED DESCRIPTION

Figure 1 shows a power system 100 for generating electrical energy - electricity - from a liquid fuel, such as petrol, Diesel, biofuels and synthetic fuels (including SAF, FAME and DME fuels), formic acid, ethanol or methanol. The power system 100 comprises an electricity generator 110 - the generator 110 -, a first fuel storage 140 and a second fuel storage 140'. In this example, the first fuel storage 140 and the second fuel storage 140' are identical, though in other implementations, they may be different.

The generator 110 comprises a fuel cell stack 120 as an energy converter for converting chemical energy to electrical energy. The generator further comprises an internal fuel tank 122 provided with an internal fuel level detector 116. Fuel is provided from the internal fuel tank 122 to the fuel cell stack 120 by means of an internal fuel pump 124. In another example, an engine generator, a combination of an internal combustion engine and an alternator or dynamo are provided as an energy converter.

The fuel cell stack 120 is connected to an electrical power converter 130, which electrical power converter 130 is arranged to convert an electrical output signal provided by the fuel cell stack 120 to a level that may be used by other devices. Such other devices may be require alternating current, whereas fuel cells generally provide direct current power. Furthermore, the electrical power converter may also convert a voltage level provided by the fuel cell stack 120 to another level, for example to 230 Volt single phase or 480 Volt triple phase. The output of the electrical power converter 130 is provided at an output terminal 132.

The generator 110 further comprises a control unit 112 arranged to control the various parts of the generator 110. Whereas not indicated in Figure 1 by means of lines for reasons of clarity, the control unit 112 is connected to the various parts of the generator 110. The control unit 112 is provided with a control antenna 114. By means of the control antenna 114, the control unit is able to communicate with the first fuel storage 140 and the second fuel storage 140', as explained below in detail. Furthermore, the control antenna 114 allows the control unit 112 to be controlled from another location, remote from the power system 100.

The control unit 112 may be a programmable control unit and may be programmed by means of a computer program comprising computer executable code that enable the control unit 112, when coupled to an operational electronic memory, to execute a method for operating the power system, for example as outlined below.

The generator 110 further comprises a flowback conduit 128 for allowing exhaust gases, in particular when containing unreacted fuel, from the fuel cell stack 120 to flow to the internal fuel tank 122. This allows for a closed system, without direct contact between the internal fuel tank 122 and the outside environment. This prevents any exhaust of fumes from the internal fuel tank 122 to pollute the ambient environment of the generator 110. An inlet to the internal fuel tank 122 may be provided, preferably by means of a one-way valve. The generator 110 comprises a three-way valve 126 to enable fuel from a fuel source outside the generator 110, like the first fuel storage 140, to be provided to the internal fuel tank 122 or directly to the fuel cell stack 120.

For certain remote operations, longer continuous operation of the generator 110 may be desired. For such operation, the maximum content of the internal fuel tank 122 may not be sufficient. Providing a larger internal fuel tank 122 may not be desired or allowed, as such may result in the generator 110 becoming too large - or a larger internal fuel tank 122 is not allowed due to local legislation. For such scenarios, the first fuel storage 140 and the second fuel storage 140' are provided.

As indicated above, the first fuel storage 140 and the second fuel storage 140' are identical, though in other implementations, they may be different. Therefore, only the parts of the first fuel storage 140 will be discussed; the second fuel storage 140' has the same components, indicated with the same reference signs, marked with a prime.

The first fuel storage 140 comprises a first storage fuel pump 146 provided at the bottom of a first external tank 150. The first storage fuel pump 146 is operationally connected to a first storage control unit 142, either wired or wirelessly, to control operation of the first storage fuel pump 146. The first storage control unit 142 is furthermore operationally connected to a first storage fuel level sensor 148, which is arranged to detect a fuel level within the first external tank 150.

The first storage fuel pump 146 is preferably large enough to pump fuel at a rate at which the internal fuel tank 122 is relatively quickly filled. Second, the first storage fuel pump should be large enough or in any case be powerful enough to pump fuel through a fuel duct to the generator 110. As such, the first storage fuel pump 146 is preferably larger than the internal fuel pump 124.

At the top of the first external tank 150, an gas inlet 152 is provided for allowing air or another gas to flow into the first external tank 150 to compensate for fuel leaving the first external tank 150 and prevent under pressure in the first external tank relative to the ambient surrounding the first external tank 150. The gas inlet 152 may be connected to the fuel cell stack 120 in the same way as the internal fuel tank 122 is connected to the fuel cell stack 120 by means of the flow back conduit 128.

The first storage control unit 142 is connected to the control unit 112 by means of a first storage antenna 144, providing a wireless connection with the control antenna 114. This allows the control unit 112 to control the first storage control unit 142 and with that, to control the first storage fuel pump 146. The first storage control unit 142 may be a mere switch or, in another example, a microcontroller or another advanced electronic control circuit.

The first storage fuel pump 146 is connected the internal fuel tank 122 by means of a first fuel duct 154 and the three-way valve 126, if present; the three-way valve 126 is an optional feature as some other features of the power system 100 are as well. This allows transport of fuel from the first storage tank 150 to the internal storage tank 122 and the fuel cell stack 120.

The first storage fuel pump 146 is also connected to an output of the electrical power converter 130 for powering the storage fuel pump 146. In Figure 1, the power is provided directly from the electrical power converter 130; in another implementation, the first storage fuel pump 146 is provided with electrical power by means of a switch or other control element of which operation is controlled by at least one of the control unit 112 or the storage control unit 142.

The first storage fuel level sensor 148 provided a signal having a value that provides an indication of the level of fuel in the first storage tank 150 and with that, the value of the signal provides information on an amount of fuel left in the first storage tank 150. This information may be relayed to the control unit 112 and subsequently to a remote monitoring location. This may allow for an alarm to be triggered, indicating for example that the first fuel storage 140 needs to be replaced or refilled. In another example, the first storage control unit 142 communicates this information to the remote monitoring location itself.

In operation, the internal fuel pump 124 withdraws fuel from the internal fuel tank 122 and provides the fuel to the fuel cell stack 120. When the control unit 112 determines that a fuel level of the internal fuel tank 122 drops below a first fuel threshold, the control unit 112 connects with the first storage control unit 142 to check whether the first fuel storage 140 can provide fuel. Upon being contacted, the first storage control unit 142 checks by means of the first storage fuel level sensor 148 whether sufficient fuel is present in the first storage tank 150.

If there is sufficient fuel available in the first storage tank 150, the first storage control unit 142 controls the first storage fuel pump 146 to pump fuel to the generator 110. Depending on the settings of the three-way valve 126 - as controlled by the control unit 112 -, fuel is provided to the internal fuel tank 122 or directly to the fuel cell stack 120.

During providing fuel to the generator 100, the first storage control unit 142 and, additionally or alternatively, the control unit 112 checks the fuel level and with that, the amount of fuel in the first storage tank 150. Additionally or alternatively, the amount of fuel or the level of fuel in the internal fuel tank 122 is checked by the control unit 112 by means of the internal fuel If the amount of fuel or the level of fuel in the internal fuel level detector 116.

If during transfer of fuel from the first fuel storage 140 the level of fuel in the internal fuel tank 122 rises above a particular threshold, operation of the first storage fuel pump 146 is halted. If during transfer of fuel from the first fuel storage 140 the level of fuel in the first storage tank 150 drops below a critical level, operation of the first storage fuel pump 146 is halted and an error signal is generated by at least one of the control unit 112 or the first storage control unit 142.

If upon generation of the error signal indicating that the first storage tank 150 is empty or almost empty or in any case below the critical level, fuel may be transferred to the generator and the internal fuel tank 122 and/or the fuel cell stack 120 from the second fuel storage 140'. Subsequently, operation of the second fuel storage 140 is executed in the same way as operation of the first fuel storage 140 is executed, as outlined above.

In summary, a system with a power generator and a separate fuel tank are provided. The power generator is arranged to transform fuel to electrical energy. The power generator has an internal tank with a first fuel pump to transport fuel to an energy converter. The separate fuel tank is provided with a second fuel pump to supply fuel to the power generator, either directly to the energy converter or to the internal fuel tank. Whereas the bill of materials may be higher compared to other systems, this system provides more flexibility and more efficiency. The second fuel pump is controlled by the power generator and may be operated if there is less than a particular amount of fuel left in the internal tank.

## Claims

1. A power generator arrangement for converting chemical energy provided by a fuel to electrical energy, the power generator arrangement comprising:
a first fuel tank for holding a first fuel tank for holding a first quantity of fuel;
an energy converter arranged to convert the chemical energy to the electrical energy;
a first fuel pump for transporting fuel from the first fuel tank to the energy converter;
a fuel level sensor arranged to provide a fuel level sensor signal having a value indicative of a level of fuel in the first fuel tank;
a fuel inlet for receiving fuel; and
a control circuit arranged to:
operate the first pump;
provide a control signal to a control receiver a fuel supply arrangement external of the power generator arrangement, for operating a second fuel pump comprised by the fuel supply arrangement, for providing fuel from a second fuel tank comprised by the fuel supply arrangement to the fuel inlet, upon determining that the fuel level sensor signal has a value meeting a pre-determined condition.

2. The power generator arrangement according to claim 1, further comprising a power outlet for providing power to the second fuel pump for operating the second fuel pump.

3. The power generator arrangement according any one of the preceding claims, wherein the fuel inlet is arranged to be connected to the second fuel pump for receiving fuel from the fuel supply arrangement.

4. The power generator arrangement according to any of the preceding claims, wherein the fuel inlet is arranged to provide fuel received to the first fuel tank.

5. The power generator arrangement according to any of the preceding claims, wherein the fuel inlet is arranged to provide fuel received directly the energy converter.

6. The power generator arrangement according to any one of the preceding claims, wherein the pre-determined condition is that the signal value indicates that the first quantity of fuel is below a pre-determined amount.

7. A fuel supply arrangement arranged for providing fuel to the power generator arrangement of any of the preceding claims, the fuel supply arrangement comprising:
a second fuel tank;
a control receiver arranged to receive the control signal;
a fuel outlet connected to the second fuel tank for providing fuel from the second fuel tank;
a second fuel pump operationally connected to the control receiver and connected to a fuel outlet to provide fuel from the second fuel tank to the fuel inlet of the power generator arrangement via the fuel outlet, upon receiving the control signal.

8. The fuel supply arrangement according to claim 7, further comprising a power inlet for receiving power from the power generator arrangement and for providing the received power to the second fuel pump for operating the second fuel pump.

9. The fuel supply arrangement according any one of the claims 7 to 8, wherein the fuel outlet is arranged to be connected to the fuel inlet for providing fuel from the fuel supply arrangement to the inlet of the power generator arrangement.

10. The fuel supply arrangement according to any one of claim 7 to 9, wherein the second fuel tank is provided with a gas inlet, the gas inlet being arranged to be coupled to a gas conduit.

11. A system for converting chemical energy provided by a fuel to electrical energy, the system comprising the power generator arrangement according to any one of claim 1 to claim 6 and the fuel supply arrangement according to any one of claim 7 to claim 10.

12. The system according to claim 11, wherein the first fuel pump has a first maximum power lower than a second maximum power of the second fuel pump.

13. The system according to any one of claim 11 to claim 12, further comprising a transportation conduit for fuel, wherein a proximal end of the transportation conduit is connected to the second fuel pump and a distal end of the transportation conduit is connected to the fuel inlet.

14. The system according to any one of claim 11 to claim 13, further comprising an electrical power supply line between the power generator arrangement and the fuel supply arrangement for providing electrical power to the second fuel pump.

15. The system according to any one of claim 11 to claim 14, wherein the power generator arrangement is provided in a first housing and the fuel supply arrangement is provided in a second housing, the second housing being distinct from the first housing.
